# EUROPEAN PATENT APPLICATION

(11) **EP 2 667 321 A1**
(43) Date of publication of application: **27.11.2013**
(21) Application number: 12168773.5
(22) Date of filing: 21.05.2012
(51) Int. Cl.: G06F 21/62

(54) **Method for requesting digital content, for providing digital content, and for producing a personal profile of a user**

(71) Applicant: RnD by Us B.V., 3723 GC Bilthoven (NL)
(72) Inventor: Brandwijk, Arie Quirinus Bastiaan, 3723 GC Bilthoven (NL); de Kruijff, Diederik, 1328 BP Almere (NL)
(74) Representative: van Essen, Peter Augustinus

(57) **Abstract**

The invention provides a method for personalizing requested digital content, wherein digital content is repeatedly received within a trusted digital world of a user and made available for a user to be experienced in his physical world. During said experiencing of said content in the user's physical world, the user's interaction is recorded and processed into a personal user profile, which is stored in the user's trusted digital world. When requesting digital contents from an untrusted digital world, said personal user profile is transmitted from the user's trusted digital world to said untrusted digital world subject to the authorization of the user.

## Description

### Field of the invention

The invention relates to a method for requesting digital content, a method for producing a personal profile of a user, and a method for providing digital content to a user.

### Background of the invention

In presenting contents from the Internet, for instance websites, to a user, the content is provided with layout or playing instructions. This content is sent to a device of a user. There, so-called browser software runs. The browser software then plays the content, using the instructions added to the content by the content-providing party. Alternatively, a media player or a so-called plug-in within a browser can be provided in order to play the content.

When browsing the internet/intranet or other network for information and/or content, a user may use search engines like Google, of go directly to a website or source of content. During this action, the search engine or the website can gather privacy-sensitive information form the user regarding his surfing behaviour, his preferences, and more sensitive information. This information is for instance gathered using cookies which reside on the user's device. The cookies can be actively running on the user's device and transmit what the user does on a website back to the host of the website. More and more, this is regarded is a breach of privacy.

### Summary of the invention

It is an aspect of the invention to provide an alternative way of providing content to a user. According to an aspect of the invention, this at least partly obviates one or more of above-described drawbacks. According to these or alternative aspects of the invention, a better protection of privacy-sensitive information may be provided. A further or alternative advantage is that content can be provided with a better serving of content to the user. Thus, content can be tailor made.

The invention therefore provides a method for requesting digital content, wherein repeatedly digital content is received within a trusted digital world of a user, said digital content is made available for the user to be experienced in his physical world, during said experiencing said content in his physical world, the user's interaction is recorded, said recorded interaction is processed into a personal profile of the user and which personal profile is stored in said trusted digital world of the user, and said personal profile is transmitted under the authorization of the user from his trusted digital world to an untrusted digital world when said user requests digital content from that untrusted digital world.

The invention further provides a method for producing a personal profile of a user, comprising:
- recording interaction data of said user with digital content with respect to exposing said user to said digital content in his physical world;
- transmitting said interaction data to a profile manager in a trusted digital world of said user;
- processing said interaction data in combination with information regarding the digital content for providing the personal profile of said user;
- storing said personal profile in said trusted digital world of said user.

The invention further provides a method for providing digital content to a user by a content server, said method comprising said content server:
- receiving a request for digital content from said user;
- receiving a personal profile of the user under the authorization of said user;
- collecting at least part of said digital content in response to said request for said content;
- processing said digital content, based upon said personal profile, for personalizing said digital content, and
- transmitting said personalized digital content to a trusted digital world of said user.

The personal profile is in the trusted digital world of the user, thus allowing the user to have control and maintain its privacy. It may further allow providing personalized content to a user in a safe way. Alternatively or additionally, parts of related data is stored or some related processes are executed in the untrusted digital world but under encryption, without the untrusted world having accessing potential to data or processes which are not authorized by the user. Only data from the user is provided to the content provider which first is authorized by the user. In an embodiment, the method does not give to the content provider an unlimited peek into for instance the browsing history of sites visited by the user or the browsing behaviour upon those visited sites of the user.

In an embodiment, recording of the interaction of the user with the content may be done before, after, or while exposing the user to the content.

In an embodiment, said digital content is personalized using said personal profile before it is received in said trusted digital world of said user.

In an embodiment, said digital content is personalized in said untrusted digital world before it is received in said trusted digital world of said user.

In an embodiment, said interaction is stored in the trusted digital world of said user.

In an embodiment, said authorization comprises an explicit authorization, in an embodiment said authorization comprises using biometric features of the user.

In an embodiment, said personal profile is constantly, in an embodiment continuously, modified during said experiencing of said digital content.

In an embodiment, first said content server receives said request for digital content, and in reply to said request, said content server communicates with said trusted digital word for receiving said personal profile.

In an embodiment, said content server receives said personal profile from said trusted digital world.

The personal profile is stored in an environment that is under the control of the user, his trusted digital world. This environment is referred to as the trusted digital world. In a most simple embodiment, it is a smart phone, tablet or other device that the user utilises to play or access content. In a more complex environment, these devices can be connected to a further part of the digital world that is under the control of the user. For instance, these devices can be functionally coupled to a local network or to other local devices. In a more complex environment, the devices can be functionally coupled to a cloud-located device. Alternatively or additionally, the device or devices may be functionally coupled to distributed devices that together form a cloud-located device that is under the control of the user. The device can be a regular digital computing device, but may also use quantum computing.

The user authorizes transmission of his profile outside his digital world. In a most simple embodiment, this can comprise a physical action of the user on a physical device that authorizes transmission of his profile. This can for instance comprise touching a touch screen or giving a voice command or performing a gesture. In a more complex environment, the user may use a token to authorise transmission. Alternatively or in combination, authorization may also comprise adding biometrical information of the user and by the user.

In an embodiment, the feature of the digital world being under the control of a user, in particular the feature of under the control, comprises that it is a part of the digital world that can not be accessed without permission of the user. Alternatively of in combination, it may be a part of the digital world that can only be accessed by the user. It can be, for instance, a part of the cloud where the user can store digital data, like personal digital data, or a remote server or a personal computer system of the user that runs in the cloud. In this respect, "in the cloud" means that at least data storage and data processing are distributed and take place using part of the total capacity of a plurality of physical devices.

Digital content in its broadest sense comprises data which is transferred digitally and which allows stimulation of one or more of the human senses like smell, sight, hearing, touch or taste at the receiving side. In an embodiment, digital contents may comprise digital films, digital music, and digital pictures. In general, digital contents comprises digital instructions that are perceivable by the senses of the user directly or indirectly by using other intermediate devices, like for instance a head cap which stimulates parts of the brain to induce these senses or other devices that transform digital instructions into stimuli that can be perceived by the user.

The digital content can be played or performed in the physical world of the user. In some most basic way, music can be played, a film can be played, electronic wear which stimulate human senses or other information can be displayed for the user to be absorbed.

The interaction of the user with the content is recorded. In a most elementary way, the time that a user watches information that is displayed can be recorded, or the keystrokes, the time interval between keystrokes, can be recorded. In an embodiment, using for instance a camera, the behaviour of the user may be recorded. For instance, his facial expressions may be recorded in combination with the content that the user is experiencing or between contents. Alternatively, the location of the visual focus of the user can be recorded, and the time that his visual focus is stationary. In an embodiment, the movements of the user and his environment can be recorded, using for instance motion sensors, or camera images or GPS signals when the user is using GPS for instance in combination with a device or vehicle. It may even be possible to determine muscular activity of a user.

The term "substantially" herein, such as in "substantially all" or in "substantially consists of", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of'.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices or apparatus herein are amongst others described during operation. As will be clear to the person skilled in the art, the invention is not limited to methods of operation or devices in operation.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device or apparatus claims enumerating several means, several of these means may be embodied by one and the same item of hardware. The mere fact that certain measures are recited in mutually different dependent claims does not indicate that a combination of these measures cannot be used to advantage.

The invention further applies to an apparatus or device comprising one or more of the characterising features described in the description and/or shown in the attached drawings. The invention further pertains to a method or process comprising one or more of the characterising features described in the description and/or shown in the attached drawings.

The various aspects discussed in this patent can be combined in order to provide additional advantages. Furthermore, some of the features can form the basis for one or more divisional applications.

### Brief description of the drawings

Embodiments of the invention will now be described, by way of example only, with reference to the accompanying schematic drawing in which corresponding reference symbols indicate corresponding parts, showing an embodiment of the invention, and showing in:
Figure 1 a schematic drawing of the user's worlds comprising the users physical world and his trusted digital world, the user's outside, untrusted digital world, and digital content flows,
Figure 2 a detailed embodiment of a personal profile manager, and
Figure 3 details of an embodiment of communication between a trusted digital world and untrusted digital world
Figures 4A-4C embodiments of content servers and providing content to the user.

### Description of preferred embodiments

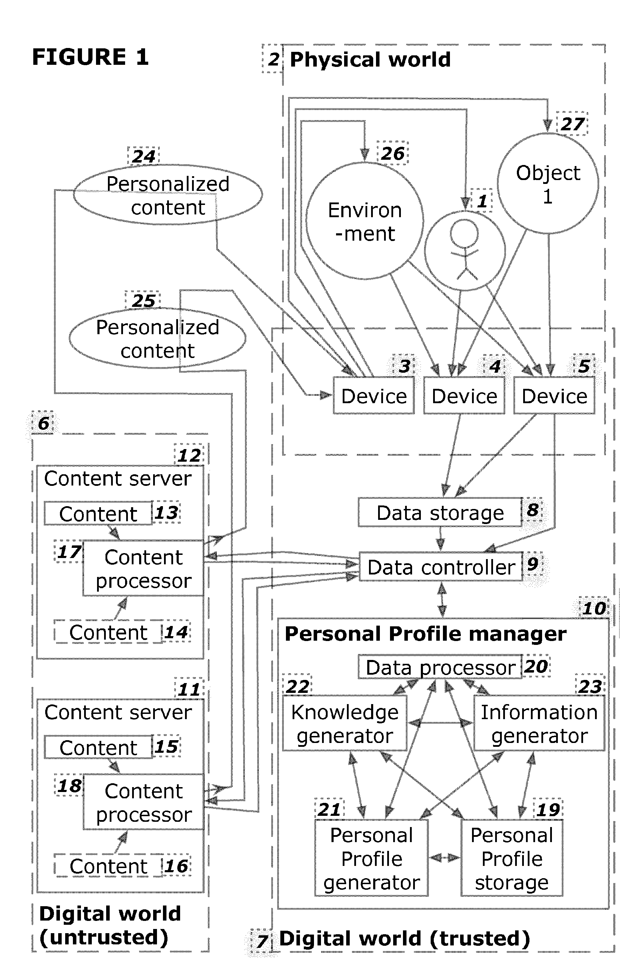

In figure 1, a basic setup is depicted showing a user 1 in his physical world 2. In this setup, the user 2 interacts with his trusted digital world 7 and an untrusted digital world 6. In his physical world 2, the user 1 has at least one device or an assembly of devices 3 (also labelled "device") which can play or display content. A device that plays or displays content or stimulates directly or indirectly the one or more of the users senses can also be referred to as "player". Such a device 3 can also stand for several devices or an assembly of devices. Device 3 in fact presents content to the user, indicated by the arrow pointing away from the device 3. This device 3, as explained above, can be a smartphone, an IPAD or similar tablet device, a media player for playing music and/or film, a computer of PC, or similar device. More in general, it can be a device that transforms content into physical stimuli that perceived by a user via the sensory perception of that user. It thus stimulates the user's senses. This includes feeling, smelling, tasting, seeing, and hearing. In general, it is described as content that is played.

The content that is played usually originates from the untrusted digital world 6. This untrusted digital world 6 can be the internet, for instance accessed using or via a provider, for storing and providing content. The content can also or alternatively be stored and/or provided from distributed systems, for instance "cloud" servers and/or "cloud" storage of third parties. The device 3 paying the content may even be a device of assembly of devices of a third party. These devices can be functionally coupled in such a way that the user can receive content form this third party. Coupling can be wired, wireless via an electromagnetical wave like via Bluetooth or WiFi, it may be via a peer-to-peer connection via for instance the internet, or similar coupling ways.

The user 1 in figure 1 has his own trusted digital world 7. This trusted digital world 7 of the user 1 can also be storage and/or servers and/or computer systems that are in another way controlled by the user 1. In his physical world 2, there is further schematically indicated the environment 26 of the user 1, and an "object 1" with reference number 27, which stands for any physical object in the physical world 2 of the user 1. This can be a "passive" object, like a plant, a poster, or a clock, for instance. Alternatively, the object 1 is an object with which the user interacts. In this embodiment, the content is transmitted from the untrusted digital world 6 to a device 3 which is physically located in the physical world 2 of the user 1, and which device 3 is at the same time located in the trusted digital world 7 of the user 1. In fact, the trusted digital world 7 of a user 1 is the user's trusted digital world if that the digital data is within his span of control. In particular, the user controls access to the digital data in his digital world, and/or controls transmission of that digital data out of this trusted digital world. Furthermore and/or alternatively, the user controls similarly or differently as described before digital contents and/or digital information and/or digital data coming into this trusted digital world 7, or going out of his trusted digital world 7.

In the physical world 2 of a user 1, in figure 1 there furthermore is at least one device 4, 5 that here measures the user's interaction related to the content that is being played in the user's trusted digital world 7, potentially also in relation to a time period before and/of after the content has been played. Alternatively or in combination, the at least one device 4, 5 measures or records the user's interaction with the untrusted digital world 6, in particular the interaction of the user 1 with the content that is played and/or displayed in his physical world 2. This is indicated in figure 1 by an arrow pointing towards the devices 4, 5. There, the devices are all located in the user's trusted digital world 7. In the embodiment of figure 1, these devices or assembly of devices 4, 5 are here also referred to as measurement device. The measurement device can be computer software running on the user's player and that registers the content and/or the nature or the content that is displayed. The measurement device can also or alternatively measure the time the user spends with this content or the actions that the user takes on his player. In can register the interaction of the user on input devices, like a keyboard, touchscreen, sound recording, but also of an other sensor like motion sensors, climate condition sensors, actions of actuators like vibrational vests or wearing gear accommodated with sensors and the like. It can be a camera that records the reactions of the user, like his facial expressions, eye movements, or locations at which the eyes are directed. Alternatively and/or additionally, the measurement device measures and/or records the user's behaviour in response to the content that is played. In fact, the functionality of the measurement device can also at least partially be integrated into device 3, the player.

The measurement device, in figure 1 devices 4 and device 5, transmits the measurements as data from the physical world 2 to a digital world. In an embodiment, the measurements are transmitted to the user's trusted digital world 7. The measurements may be stored in, or passed through, a data storage 8. The data is under control of a data controller 9 or may come directly from a measurement device as indicated by the arrow which points directly from device 5 to data controller 9. The data controller 9 can communicate at least part of the data with a profile manager 10. If authorised by the user 1, certain authorized data can be communicated to the untrusted digital world outside his trusted digital world 7 by the data controller 9. For instance, this data can be communicated to first content server 11 and/or a second content server 12. The content servers 11, 12 have access to content 13-16, and a content processor 17, 18. The content 13-16 can be stored content, and/or can be live content. This stored content 13-16 can be stored locally with the content server 11, 12. For instance at a physical content server 11, 12. Alternatively, the content 13-16 is stored remotely and retrieved by the content server 11, 12. Such remote storage can for instance be distributed.

Content server 11, 12 does not need to have full control over content. This is indicated by the striped content 14, 16 in figure 1: A content server can use agents, pull and/or push mechanisms, direct or indirect linking or even syndication to retrieve content which is under a different span of control. The content server may also or additionally use for at least these methods multiple content servers. A change in content server hierarchy may for instance occur. In figures 1-4, content 14 and content 16 may also be seem as content processors having access to multiple contents.

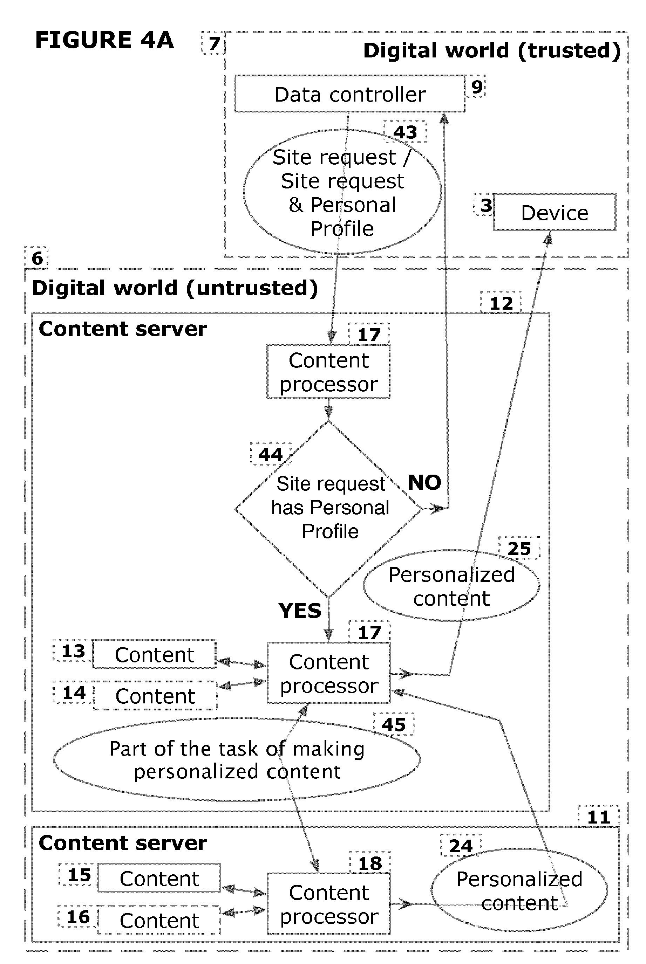

A further related embodiment is that content server 12 receives a personal profile, and the task of making the personalized content is in part or as a whole distributed to other content servers as is depicted in Figure 4A. In Figure 4A, a part of the personal profile is used by content processor 18 of content server 11. Content server 11 performs part of the task of making personalized content. Furthermore, at least part of the personalized content is returned to content processor 17 of content server 12 which in turn sends this personalized content to device 3. In the example of figure 4A it is even possible that content server 12 combines content 13 with personalized content from content server 11 and this combined content is returned to device 3. An example for this is when content processor 17 of content server 12 takes care of retrieving a requested movie and uses the personal profile which contains a preference for a certain language subtitle. In this task or request, content server 11 which can make available the subtitle in the right language for that movie. Potentially, content server 11 can provide the subtitle as an overlay to the movie to the content processor 17 of content server 12. In figure 4A, the combined result of the right subtitle and the movie, forming the personalized content, is returned by content processor 17 of content server 12 to device 3. In another, related, embodiment of example of figure 4A, part of the personal profile itself may have been distributed to content server 11 and was used by content processor 18.

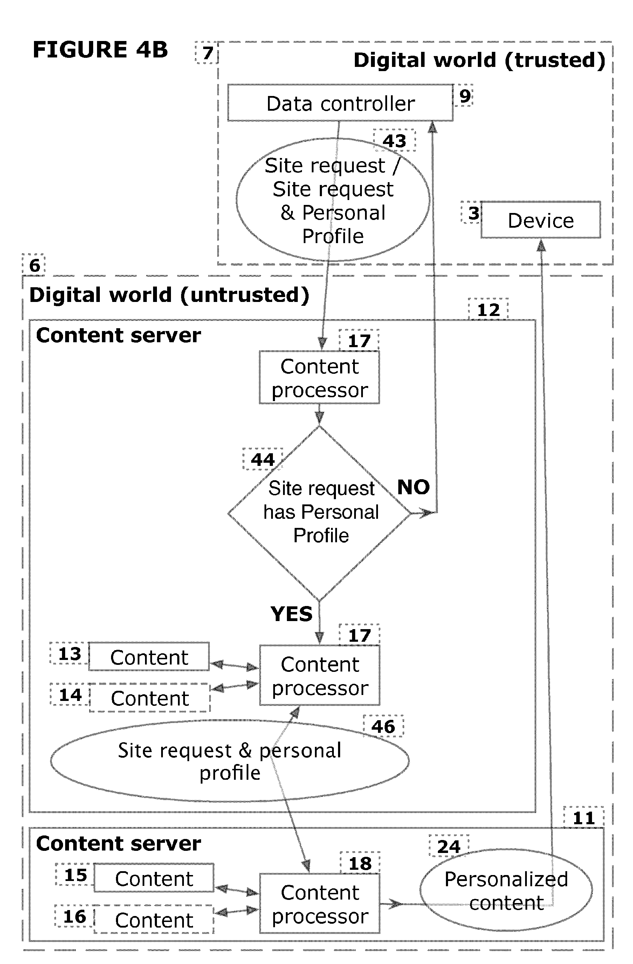

Potentially, it is possible that content server 12 receives the personal profile and distributes the complete task to content server 11. Content server 11 in turn takes care of this task, or content server 11 itself in turn distributes parts of the task to other content servers. In view of the previous, it is not even needed that the receiver of the personal profile is also the returner of the personalized content. This embodiment is depicted in figure 4B.

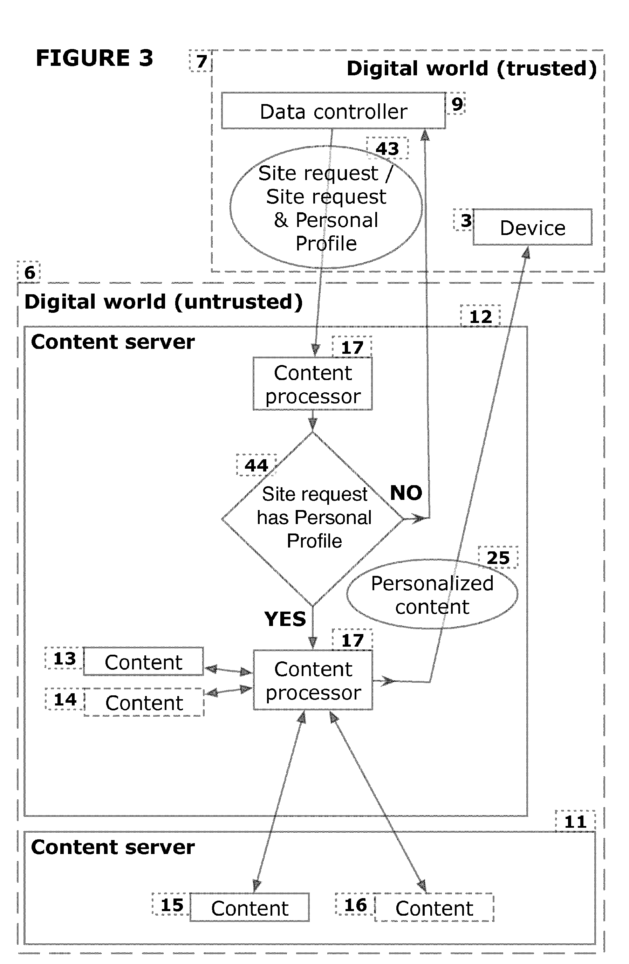

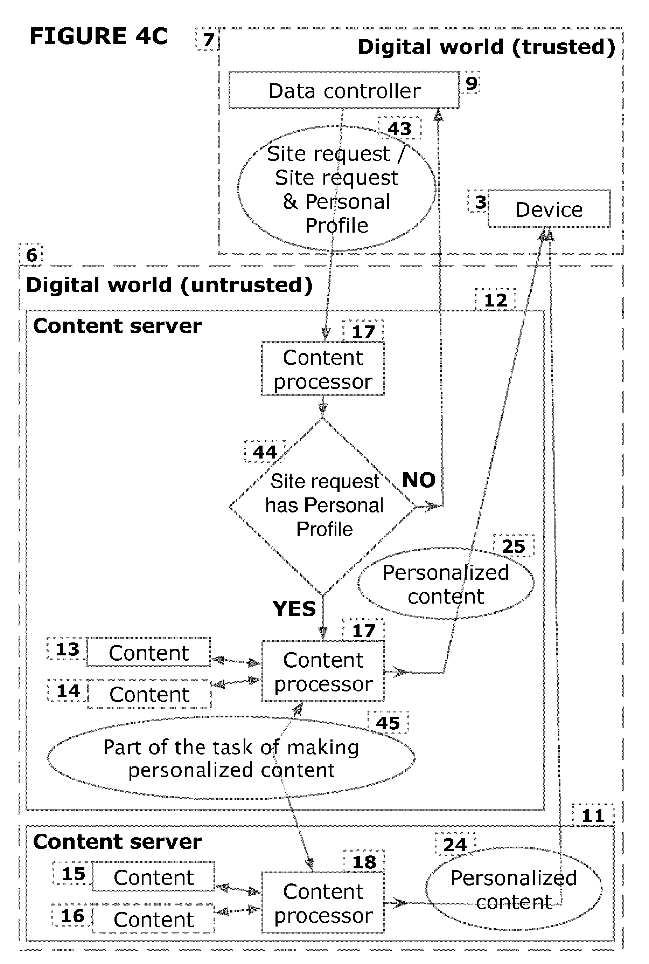

Sometimes the personalized content can come to the device 3 from multiple connections to content servers. Consider the previously mentioned example of the movie and the subtitle. The movie may originate from content server 12, and the subtitle may come from content server 11. These parts are simultaneously received at device 3. Device 3 in turn is able to combine these two connections, and the user can view the combined content in the right manner. An embodiment of this example is depicted in Figure 4C. In figure 4C is demonstrated how even personalized content from the content processors can be returned to device 3. In figure 3, personalized content 24 and personalized content 25 are depicted as arriving at device 3. It must be understood that this can occur simultaneously, alternating, sequentially, scheduled or in any other form of delivery as is the case in all the other described embodiments.

Another embodiment of this example is when the combination of returned content received at device 3 forms the personalized content. It may be required to send additional instructions or use additional software, for instance in the form of an addin or an app, to make the personalized content.

At the content servers 11, 12, the content processors 17, 18 retrieve content 13-16. When retrieved, or even during retrieval in case of for instance a streaming transmission, the content processor 17, 18 processes the content 13-16 using a personal profile of user 1 that is retrieved from the personal profile manager 10. This personal profile is then transmitted by data controller 9 with the consent of the user 1 from his trusted digital world 7 to the untrusted digital world 6, in particular to content servers 11, 12 in the untrusted digital world 6.

In the embodiment of figure 1, it is clear that in that embodiment the devices 3, 4, 5 are in fact physically in the user's physical world 2 and also located in the trusted digital world 7 of that user. For instance, the devices 3, 4, 5 can store digital content which they can mutually share, and these devices can be controlled by the user 1.

In the embodiment of figure 1, in order to obtain content, the user 1 in his physical world 2 transmits one or more requests for (additional and/or other) content via his trusted digital world 7. Often, these requests are given by, or transmitted via, a device which is part of the user's trusted digital world 7. From there, these requests are issued to the untrusted digital world 6. These requests can be issued for instance to "the internet" or similarly organised network, and/or they can be requests for content issued to peer-to-peer systems. Alternatively and/or additionally, a direct communication method between devices which are in each other neighbourhood can be used. This communication can be wireless (analog and/or digital) and be set up by using protocols like Bluetooth, LTE (long term evolution) or other protocols like discovery protocols. In the current invention, the requests are in general transmitted via the user's trusted digital world 7. In the user's trusted digital world 7, a request is first handled and processed by data controller 9. Additionally, personal profile information can be added by data controller 9. This will be explained later.

In the embodiment of figure 1, the measurements of devices 4, 5 can be (pre)processed by the measurement devices themselves, and/or at least part of the "raw" measurement data can be transferred to the user's trusted digital world 7 or to other devices within the user's trusted digital world 7. Thus, the result of the measurement device 4, 5, is collected in data storage 8 or may go directly to data controller 9 or a combination thereof.

In the embodiment of figure 1, personalized content 24, 25 is transmitted to device 3 in the user's physical world 2. In this embodiment of figure 1, a user's privacy is protected and secured by letting the transmissions and requests run via the user's trusted digital world 7, in other words, by giving the user more control over the flow of digital data that goes to third parties.

In the embodiment of figure 1, a personal profile of user 1 is managed by personal profile manager 10. Under the auspices or control of the personal profile manager, the personal profile is stored and designated here as personal profile storage 19. Measurement data from the device 4, 5 regarding the user are transmitted directly or indirectly to data controller 9. The data controller 9 transmits data to the personal profile manager 10, and retrieves from the personal profile manager 10 the personal profile.

In the personal profile manager 10 of the embodiment of figure 1, several components work together in generating the personal profile of a user. These components are the data processor 20, the information generator 23, the personal profile storage 19, the personal profile generator 21, and knowledge generator 22. In the embodiment of figure 1, all these components may exchange data with one another, indicated by all the arrows that interconnect the components.

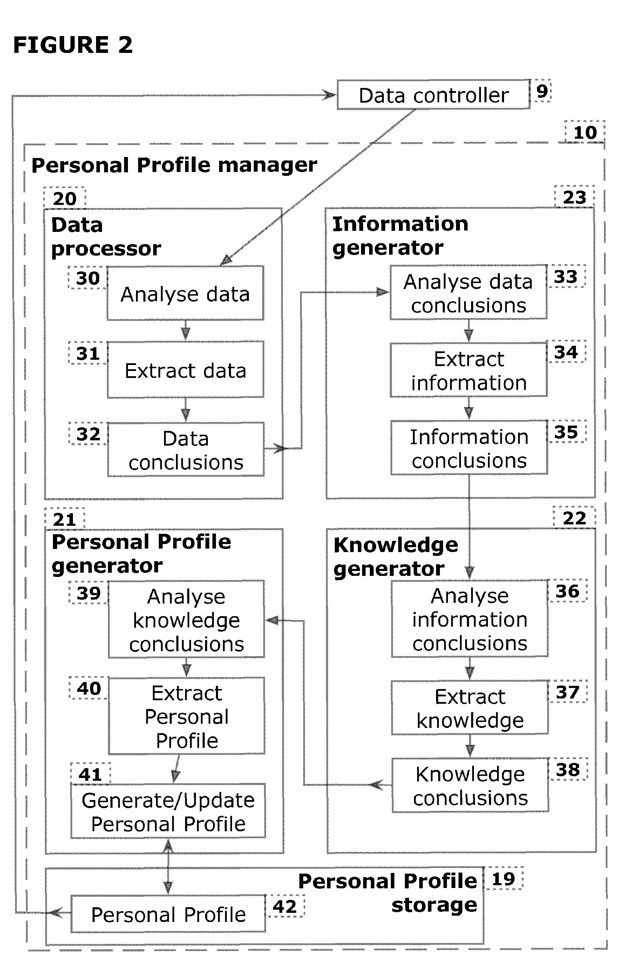

In figure 2, an embodiment is provided of a personal profile manager 10. In this embodiment, some flows of data are shown in a simplified layout. In the various components, processing steps are indicated and provided with a reference number between brackets.

In this embodiment, data controller 9 transmits data to the data processor 20. The data processor may execute the following steps in this embodiment. First, the data processor will analyse the data (30). Data can for instance be ordered and placed in defined files. This may occur in the trusted digital world 7, not necessarily in the personal profile manager, but for instance in data storage 8. Analysis of data can be needed in case "raw data" comes out of device 4, 5. For instance, devices 4, 5 may be a camera or an input sensor. The ordering may include ordering data from different measurement devices in a certain order, chronologically when time is a factor or a variable, or in a certain statistical format when thresholds are used for extraction for making data conclusions. To that end, relevant parts of the data are extracted per measurement device. If needed, data are combined with earlier measurements, to extract data from the measurements and make data conclusions per measurement device and/or per measurement type if a device is capable of measuring multiple types of interactions. Thus, relevant data is produced. The data conclusions may be stored. An outcome of the data conclusions is for instance a relevant range of values per type of measurement, and/ or per type of measurement device. Each range may get a label referencing a certain measurement type and/or measurement device. These ranges might be ordered with regard to time, magnitude, occurrence or other ordering criteria. In case data is already available in an ordered manner, for instance a camera which produces images with the required time indicated in the name that is given to a picture file, certain steps in the data processer might not be necessary to be performed.

After analysing the data, the data processor 20 will extract data (31) from the analysed data.

From the extracted data that was extracted in the step extract data (31), data conclusions result. These data conclusions in an embodiment are ordered sheets of relevant data that is ordered, scaled if needed, and made ready for further processing.

The data after being processed by data processor 20 in this embodiment subsequently goes to information generator 23. In information generator 23, the following steps are executed. First, the processed data from data processor 20 is analysed (33). Using the analysis, information is extracted (34). In an embodiment, for instance, measured data from different sources like devices 4 and 5 are combined or from different measurement types. Images can for instance be analysed and from the images, for instance facial images of the user 1, emotions can be extracted. These emotions can be combined with time. Furthermore, played content can be placed into categories, and fragments can be provided with labels. In an embodiment, the time-stamped emotions can be combined with the time-stamped labels of the played content. Thus, information conclusions 35 are made.

The information conclusions 35 are in turn provided to the knowledge generator 22. There, the information conclusions are analysed (36) and knowledge is extracted (37). This results in knowledge conclusions 38. In an embodiment, this knowledge conclusions can comprise conclusions as to what type of content generates which type of emotions in the user 1. Further dependencies may also be combined with this, like time of the year, time of the day. Knowledge may for instance be, as for this purpose interpreted out of digital data:

"The user becomes happy when he watches a certain soap in the evening in the winter" or "The user after having seen content waits five seconds before his face moves back from a screen" or "The user is moving 60% or the time while music of a certain artist is being played."

The knowledge conclusions are shared with personal profile generator 21. There, the knowledge conclusions 38 are analysed (39) and an intermediate personal profile is extracted (40). This intermediate personal profile is used to update or generate a personal profile (41). The personal profile is subsequently stored in personal profile storage 19 and personal profile 42.

Personal profile generator 21 uses knowledge and/or information to update the profile. The knowledge generator 22, as well as other elements within the personal profile manager 10, can for instance apply rules, statistical methods based on random selections, stochastic methods, fuzzy logic, genetic algorithms or other correlation and dependence methods and combinations thereof, to process information. Often, in an embodiment, data mining techniques are used at different steps. Knowledge generator 22 can use predictive analytics and forecasting methods. In another implementation of this part of the invention, each element 19-23 may interact with another element 19-23 within the personal profile manager 10, since certain steps do not need to be taken. Certain measurement types or certain processes may be bi-or multidirectional and do not require a certain process order. This for example also is true for the to and fro exchange of digital data between 32 and 39 directly. Although not all data or measurement types are described, it is clear that interaction measurements can be transformed into information. When combined, information allows generation of knowledge. This knowledge can be used in the personal profile.

The arrow of data controller 9 to the personal profile 42 depicts the retrieval of the personal profile when needed for communication with the untrusted digital world 6. In an embodiment, not the complete personal profile is used in that communication, but only a part of that personal profile. It must be understood that the data controller 9 not only interacts with element 30 and 42. Data controller 9 can interact with each element of the personal profile manager as well as with the personal profile manager itself.

In figure 3, an embodiment is shown of the processes that take place in for instance the content server 12, and of the interaction between the content server 12 and another content server 11, and between the trusted digital world 7 of a user 1 and content server 12 in the untrusted digital world 6.

Data controller 9 transmits a site request or a site request together with a personal profile 43 to the content server 12. In case that only the site request is transmitted, the content server 12 and data controller 9 may enter into communication that results in the transmission of at least part of the personal profile. In this case, also a personal profile is provided with the request. The site request will in this description of figure 3 be referred to in shorthand as "request 43".

In content server 12, the request 43 is received by content processor 17. As mentioned before, in case the request does not comprise a personal profile, the content processor 17 will enter into communication with data controller 9 in order to obtain a personal profile. If the request comprises a personal profile, the content processor 17 may access local data sources 13, 14 which provide content. Alternatively, the content processor 17 may access external data sources or remote data sources 15, 16 on contents server 11. The content processor 17 processes the received content and makes personalized content 25 which is subsequently provided to device 3. In a relatively simple embodiment, the request may be directed to a news site and request the latest news. In the personal profile that is provided with the request, there may be one or more of the following information:
- in the early morning, user prefers news on finance, traffic information and football information;
- user has an academic level, but prefers short film in his morning news;
- user prefers financial news regarding Europe;
- user has a good sense of humour, but not in the early morning;
- user likes a certain soap on television.
Based in this (part of a) personal profile, the content processor retrieves information on finance from his local sources, but also from international news sites. These sites should all have a high qualification standard. In particular, content processor 17 retrieves short films on the news. Furthermore, the content processor 17 retrieves local traffic information from a traffic information site. Finally, the content processor 17 retrieves information on the days and times the soap will be on television.

Next, the content processor will compose a tailor-made layout for a site, in which the joke of the day is removed. A short newsflash is provided stating at which times and which stations the soap will be on television today. It will also state which episodes. Links for retrieving short trailers are added. The news will be placed on the personalized site, in the form of short films as much as possible, and directed to financial news in Europe. The personal profile also contains some information on colour preferences of the user, and that he seems to fancy a sober layout, but in two columns. The content profile will use this information. Furthermore, it will first present the traffic information in a short form. An embodiment is that the personal profile can be used to accommodate, next to the users preferred data, advertisements which are related to the users personal profile. In this sense the content provider is able to present advertisements, tailored to the users personal profile instead of giving general advertisements which might not be of interest to the user. Even content in which only the ads are related to the personal profile can be typed as personalized content. Another embodiment is that the personal profile contains the amount of lumen of the environment the user is in. The personalized content adjusts the brightness of the content instead of the user having to tune his device on which the user receives the content. This example can thus for instance also be applicable to volume levels or other measured levels. These kinds of personalized content 25 will be transmitted to device 3 where it will be played to the user. This might even be performed in collaboration with data controller 9.

In the embodiment of figure 1, the measurement data info coming from the measurement devices 4, 5 is processed by the personal profile manager 10 in the trusted digital world 7 of user 1. The personal profile manager 10 processes incoming data from the measurement device 4, 5 and received from data controller 9. The personal profile manager 10 processes the data using data processor 20, and processes it into information 23 that is relevant for the personal profile. Using the processed data, which is processed eventually into knowledge, this knowledge is used to build, maintain and update the personal profile. In an embodiment, the user 1 has access to the personal profile manager 10. It allows the user to modify his personal profile directly. Potentially, this can be done by using a wizard which helps the user make changes. This wizard can be located in the trusted digital world 7 and/or it may be a secure webpage which services the wizard application for that purpose. In an embodiment, the user 1 can also or instead of this change settings, like for instance the update intervals, weight of various parameters, of method or methods that are used to evaluate data, rate date and/or to process data.

In the trusted digital world 7 of a user 1, transmission of at least part of the personal profile is handled by the data controller 9. When issuing a request for content to at least one content server 11, 12 in the untrusted digital world 6, the data controller 9 issues a request for a profile 19 to the profile manager 10. In one embodiment, the profile manager 10 then transmits at least a part of the user's profile 19 to the data controller 9, and data controller 9 transmits the request together with the users profile 19 to the untrusted digital world 6. Alternatively, the data controller 9 first transmits at least part of a request, and subsequently negotiates with the untrusted digital world regarding transmission of at least part of the user's profile.

The content servers 11, 12 in the untrusted digital world 6 have access to content 13-16. In an embodiment, these content servers have at least part of that content 13-16 stored. The untrusted digital world receives the requests for content, together with at least part of a user's profile in a content processor. Alternatively, the profile of the user can be transmitted after sending the request, for instance when the content server requests for a user's profile. The content processor retrieves at least part of the requested content and processes that content using the user's profile. In such a way, content can be provided that is dedicated to a user. The content thus becomes personalized content 24, 25.

In an embodiment, part of the functionality of the personal profile manager 10, in particular relating to the profile, can be transferred to a trusted party, that may also be called an escrow. This trusted party provides a secure digital world, potentially encrypted, and will this become part of the trusted digital world 7 of user 1. It may receive measurement data from the user 1.

In an embodiment, the process of generating a personal profile is a loop. The loop may be performed continuously or regularly. The devices 4, 5 may in an embodiment provide non-stop data to the data controller. This data is transferred by the data controller 9. In an embodiment, the data controller 9 transmits the data constantly, in particular continuously, to personal profile manager 10. In a loop, the data is processed by the data processor 20, the data conclusions are processed by the information generator 23, the information conclusions are processed by the knowledge generator 22, and the personal profile 42 is continuously updated by the personal profile generator 21. This may lead to additions to the personal profile, or modifications to the personal profile 42. In an embodiment, the process of generating a personal profile has completed one loop of requesting content, receiving content, measuring the interaction, making a personal profile, issuing a new request with part of the generated personal profile, receiving personalized content and measuring the interaction for the second time and use that for updating the personal profile.

In the embodiments described above, the data controller may also refer to the untrusted digital world to retrieve data in order to support the measurements or to support the personal profile manager or elements of the personal profile manager with additional data regarding the content. This process can for instance be done autonomously, thus without certain required user interaction. Another embodiment allows for a measurement device or even device 3 to execute one these support processes.

From the description above, it has become clear that in fact, the personal profile may be interpreted as a prediction model which allows for a better servicing of content to a user from the users perspective as well as from the content providers perspective.

It will also be clear that the above description and drawings are included to illustrate some embodiments of the invention, and not to limit the scope of protection. Starting from this disclosure, many more embodiments will be evident to a skilled person which are within the scope of protection and the essence of this invention and which are obvious combinations of prior art techniques and the disclosure of this patent.

## Claims

1. A method for requesting digital content, wherein repeatedly digital content is received within a trusted digital world of a user, said digital content is made available for the user to be experienced in his physical world, during said experiencing said content in his physical world, the user's interaction is recorded, said recorded interaction is processed into a personal profile of the user and which personal profile is stored in said trusted digital world of the user, and said personal profile is transmitted under the authorization of the user from his trusted digital world to an untrusted digital world when said user requests digital content from that untrusted digital world.

2. The method of claim 1, wherein said digital content is personalized using said personal profile before it is received in said trusted digital world of said user.

3. The method of claim 1 or 2, wherein said digital content is personalized in said untrusted digital world before it is received in said trusted digital world of said user.

4. The method of any one of the preceding claims, wherein said interaction is stored in the trusted digital world of said user.

5. The method of any one of the preceding claims, wherein said authorization comprises an explicit authorization, in an embodiment said authorization comprises comparing biometric features of the user.

6. The method according to any one of the preceding claims, wherein said personal profile is constantly, in an embodiment continuously, modified during said experiencing of said digital content.

7. A method for producing a personal profile of a user, comprising:
- recording interaction data of said user with digital content while exposing said user to said digital content in his physical world;
- transmitting said interaction data to a profile manager in a trusted digital world of said user;
- processing said interaction data in combination with information regarding the digital content for providing the personal profile of said user;
- storing said personal profile in said trusted digital world of said user.

8. A method for providing digital content to a user by a content server, said method comprising said content server:
- receiving a request for digital content from said user;
- receiving a personal profile of the user after authorization by said user;
- collecting at least part of said digital content in response to said request for said content;
- processing said digital content, based upon said personal profile, for personalizing said digital content, and
- transmitting said personalized digital content to a trusted digital world of said user.

9. The method of claim 8, wherein first said content server receives said request for digital content, and in reply to said request, said content server communicates with said trusted digital word for receiving said personal profile.

10. The method of claims 8 or 9, wherein said content server receives said personal profile from said trusted digital world.

11. A method for generating content preferences of a first user, the method comprising:
- visiting a first web site through a device operated by a first user;
- (dis)playing digital content that is retrieved from said first website on said device via web browser software;
- collecting data with respect to the user's experience/appreciation regarding at least part of said digital content provided by the first website and storing that data to one or more data storages and are under the authorization of the first user;
- analysing the collected data, in combination with data already available at the one or more data storages, regarding the first user's experience/appreciation of said at least part of the digital content of said first webpage;
- drawing conclusions regarding a personality of the first user out of that analysis;
- making the conclusions available to a device and under the authorization of the first user prior to requesting digital content from a second webpage;
- providing the second webpage with at least part of said conclusions under the authorization of the user, and with a request for digital content;
- receiving from the second webpage digital content, on a device operated by the first user, said digital content based upon the provided part of the conclusions.

12. A method for searching for content, comprising:
- providing search query information into a content retrieving apparatus by a user
- retrieving content information;
- ranking said content information bases upon user information authorized by said user.

13. A method for playing digital web content from a web source on a device under the control of a user, said method comprising:
- collecting data relating to the user's appreciation of said content;
- storing said collected data under the control of said user;
- making available at least part of said collected data to said web source and under the authorization of the user;
- personalizing further web content that is provided to said user by said web source based upon said collected data.

14. A method for retrieving digital content from an internet/network source and by a user, wherein a personal profile of the user is provided under the control of the user to said network source, and said network source applies said personal profile to said digital content for personalising said digital content before making said digital content available to said user.

15. A method for building a personal profile of a user, wherein at least during playing of content to said user, the users experience is determined under the authorization of the user, said user experience is added to previously determined users experience under the authorization of the user, said user experience is processed into a personal profile under the authorization of the user, when requesting further digital content, at least part of said users personal profile is made available to a source of said digital content, and before providing digital content, said digital content is personalised using said users personal profile.

16. A method of providing digital contents by a source to a user, wherein said source receives a request for said digital contents from said user together with at least part of a personal profile from said user, said source personalizes said digital contents based upon said users personal profile, and said source makes said personalized digital content available to said user.
